# EUROPEAN PATENT APPLICATION

(11) **EP 2 439 402 A1**
(43) Date of publication of application: **11.04.2012**
(21) Application number: 10783000.2
(22) Date of filing: 01.06.2010
(51) Int. Cl.: F03B 13/26, F03B 17/06

(54) **SUBMERSIBLE DEVICE FOR THE COUPLING OF WATER WHEELS OR TURBINES IN ORDER TO HARNESS ENERGY FROM FLOWING WATER**

(30) Priority: 05.06.2009 ES 200901375
(71) Applicant: Energy Whaletailturbine, S.L., 13005 Ciudad Real (ES)
(72) Inventor: VELLÓN GASCÓN, Carmelo, 13.002 - Ciudad Real (ES); BATRINAC, Anamaria, 13.003 Ciudad Real (ES)
(74) Representative: Pons Ariño, Angel
(86) International application number: PCT/ES2010/000242
(87) International publication number: WO 2010/139818

(57) **Abstract**

Submersible device designed for the attachment of water wheels or turbines in order to obtain energy from flowing water.

Submersible device designed for the attachment of water wheels or turbines in order to obtain energy from flowing water having a variable depth and flow direction. The device is intended to be installed on a seabed or riverbed using a pivoting mechanism and provided with a series of devices for controlling the inclination of the device for the attachment of turbines, and positioning it at the optimum angle of incidence between the water flow and the turbine. The invention also includes: points for accommodation the turbine at a sufficient distance from the attachment area; devices to measure the intensity of the flow, connected to a system to analyse the data obtained; some sealed compartments; and some devices that are able to change the density inside the sealed compartments. The invention has a particular hydrodynamic shape that facilitates the orientation and stabilization in the direction and centre of the flow consisting of a shape similar to that of a boomerang in its profile view and that of an aeroplane in its plan view.

## Description

Submersible device designed for the attachment of water wheels or turbines in order to obtain energy from flowing water.

### Purpose of the invention

The invention outlined below is a device designed for the attachment of turbines or water wheels in order to obtain energy from flowing water which varies in depth and flow direction. The invention is installed using a pivot mechanism either fixed directly to the seabed or riverbed, or fixed firstly to a base and then to the seabed or riverbed. The device has a special hydrodynamic form which contributes to its orientation and stabilization directly into the centre of the oncoming current, and includes a series of devices intended to establish the most efficient and productive angle of attack of the attached turbine into the current flow.

The invention can be used in any type of water current but is particularly suited to the location in a marine current.

One of the objects of the invention is as a device to which different types of turbines and water wheels can be attached, in order to orientate them in the centre of a water current flow which varies in depth and direction.

As a consequence, the principal use for the device is to generate energy, preferably electric energy, which can be obtained using a combination of the installed turbine with a generator.

The invention fits within the category of eco-friendly renewable energy systems.

### Invention background

One of the world's most significant energy sources is the kinetic energy generated by marine currents. These currents are caused by, amongst other things, differences in temperature and salinity, as well as the influence of the tides. These effects are amplified when the current passes through narrow areas limited by land masses, which increases its velocity.

One of the principle methods for capturing this energy consists of using kinetic energy converters similar to wind turbines. Amongst the large variety of existing technologies, one technique for capturing energy from surface currents, which is normally where current speeds are fastest, consists of using turbines similar to wind turbines, but installed underwater in this case. The turbine rotor is fitted in a structure on the seabed which has been prepared previously, or suspended using a floating system with suitable moorings which can be installed in shallow and deep water. As with wind energy, two principal types of rotors are used in marine currents: axial rotors e.g. propellers with horizontal axles and cross flow rotors with a vertical axle. The amount of energy which can be extracted from a current within each unit's area of influence is proportional to the density of the fluid and its speed. Given that water is 850 times denser than air and that the speed of liquid is lower than the speed of air, the amount of energy which can be extracted from a current within each unit's area of influence is much greater than that which could be obtained using a wind turbine.

These currents which contain huge amounts of energy are usually predictable easily as regards their availability and they have a potential generating capacity between 40 and 60% higher than alternative intermittent renewable energy sources. Moreover, submarine systems have little environmental impact, as they do not produce visual or acoustic pollution, and have minimal effect on marine life due to the slow rotation of their rotors. Another benefit is that submarine systems are protected from storm damage.

There are numerous devices in existence which make use of marine current energy, for example the following patents outline such devices: US20020158472, US6109863, W02008091172, W02009004308, GB2441821, W02009026620, US6472768, US4748808 and GB2434410.

The majority of the patents outlined above employ an axial flow turbine, and although some allow adjustments in position or orientation of the same, none of them make effective use of hydrodynamics. In the proposed solution a transverse flow turbine is used preferably. Moreover, the majority of these systems are also designed to be installed in shallow waters, whereas this device is capable of working at much greater depths.

Another advantage to the invention described in this report in the context of existing technologies is that the device can be made in big size, due to the device shape design is easily scalable, whereas the aforementioned devices do not have that possibility because they generally employ axial flow turbines and although their size might be considerable is always limited by their design.

The majority of existing systems in the context of existing technologies consist of multiple mechanisms with varying degrees of movement relative to one another, which require frequent maintenance. Moreover, the cost of submarine maintenance also increases relative to the depth at which technology is installed. The proposed device does not require complicated mechanisms which guarantee less frequent maintenance.

Most extant technologies require previous seabed engineering prior to the installation of turbines; our device can be installed directly from the surface without any prior installations because it incorporates a system for controlled immersion and submersion.

Technical problems with the above approach arise when the current is at a considerable depth, in this case the direction, height and also whether the current is ascending or descending are all variables to be considered. The difficulty lies in orientating a turbine in this type of current in order to obtain the appropriate performance.

Outlined below is a way of solving this using a device designed specifically for the execution of this task.

### Detailed description of the invention

The device outlined in this document is a new submersible device designed to accommodate hydraulic turbines in order to obtain energy from currents which vary in depth and flow direction. The device is installed using a pivot mechanism either fixed directly to the seabed or riverbed or through a ballast or excess weight. The device has a special hydrodynamic form which contributes to its orientation and stabilization directly into the centre of the oncoming current. It also includes a series of strategically placed devices intended to measure the drift and a system to control and manage the mentioned device to establish the most efficient and productive angle of attack of the attached turbines into the current flow.

The invention is formed essentially by a symmetrical and multipurpose body which is symmetric regarding a hypothetical central design, in which each of the various different parts of the invention contribute to different functions and do different actions.

The various parts of the invention accomplish the following functions:
- Provision of a connection point for installation.
- Provision of space to install sensors to measure flow intensity.
- Provision of space in which to install a turbine at a sufficient distance from the point of connection to allow sufficient movement in order to reach the current flow.
- Provision of space for the location of a system which permits to this a suspended inclination of the device in the current flow.

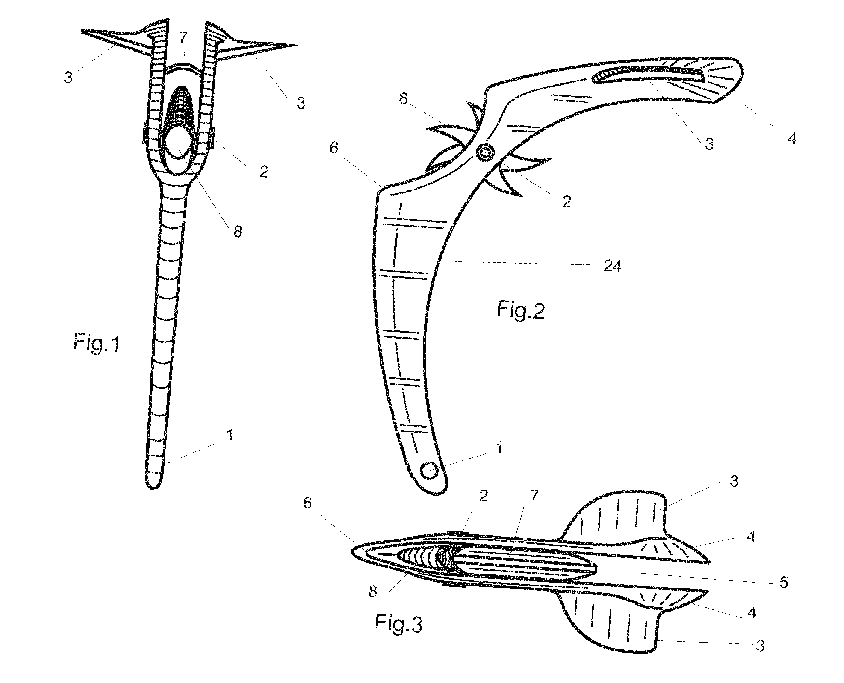

The different shapes of which the device is composed contribute to certain behaviours of the device in a current flow. The various different shapes are as follows:
- The hydrodynamic form of the device which resembles a boomerang in profile view (see Fig. 2) and an aeroplane in plan view (see Fig. 3) contributes to orientation and stabilization.
- The shape of the area (6) preceding that which houses the turbine contributes to optimise its performance, by directing water onto the turbine rotor.
- The shape of the back area to the turbine (8) in the direction of the current flow helps to minimise the effects of turbulence that will cause the movement of the turbine.
- The shape (3) of the rearmost part of the device in relation to the current flow, similar to the wings of an aircraft (see Fig. 3), contributes in particular to the stability of the device.
- The shape of the upper area (7) where the turbine is housed contributes to the strengthening of that area and also acts as a nozzle for the turbine.

The aforementioned structure and multifunctional body of the device includes:
- A point (1) of fastening or connection to a mechanism which will be installed in the seabed or ballast anchored in it. This mechanism could achieve two simultaneous movements, which consist of a preferably partial rotation movement positioned in a vertical way in relation to the point at which the device is secured to the attachment of turbines and at the same time a partial horizontal rotation in relation to the same point.
- A series of devices to measure the intensity of the current flow connected to a system to analyze the data obtained.
- A series of points for the attachment of a hydraulic turbine (preferably transverse flow) with a rotor composed of two parallel discs to which curved blades are attached in circular sector form, in order to favour this design to the integration of the hydrodynamic form of the system.
- A series of sealed compartments which contain a gas, preferably air.
- A series of devices which employ a certain method to alter the density of the gas in the sealed compartments mentioned previously, in order to control the inclination of the device for the attachment of turbines and also to position them with the best possible angle of attack of the current to the turbine.

The device and its materials can be composed of a single piece or numerous pieces which can be assembled into a whole, preferably of rigid construction and not discounting the possibility of articulation. Ideally the structure would be metal (alloy or otherwise) which could be covered with an appropriate plastic material to protect against erosion agents of the environment. In this way, in the large device realizations a great consistency is achieved. It is also considered the possibility of manufacture from a single material or alloy either in solid form or with cavities occupied by any kind of liquid fluid or gas.
It would be preferable that the density of the total volume would be less than that of water, contributing to the suspension of the device to the attachment of turbines in the water current flow.
Let's consider the devices and parts of the structure which contribute to the form of the device with the objective of orientating itself directly into the direction of the current flow. The shape and surfaces of these parts must ensure that the surface area of the part facing the current flow is smaller than the surface area of the rearmost part of the device in the same current. This structure resembles a boomerang in profile view to the current flow (see Fig. 2) and an aeroplane in plan view (see Fig. 3). Its hydrodynamic form contributes (as described previously) to its ability to orientate itself directly into the current flow. With this objective in mind the device has a unique hydrodynamic form which is comprised of three distinct parts or zones, one for its attachment (1) or connection to a mechanism (25), another which contains a series of sealed compartments (4) and another between the preceding two (2) to house a hydraulic turbine, preferably transverse flow type.

Through the attachment point (1) or connexion the device will be attached to a mechanism (25) or similar. This consists of a cylindrical orifice of appropriate size and measure to accommodate the link (9) of the selected pivot mechanism (25).

The purpose of the sealed compartments (4) is to maintain the suspension of the device to the attachment of turbines at a certain angle to the seabed. In order to achieve this action they need to be completely or partially filled with a gaseous fluid, preferably air. The total available volume of these compartments must be sufficient to guarantee the suspension of the entire system, including the turbines and the mechanism for the utilization and transformation of its movement. For this reason the total density of the system should be less than the density of the fluid in which it is submerged. The vertical direction and to the surface of the thrust acting, which this less dense volume will provoke whilst submerged in a denser fluid must be sufficient to offset the thrust acting experienced on the system by the water current, as the device is connected to the base at a single point and remains suspended in the current as described.
The inclination of the device can be adjusted by altering the system's density which can be achieved in two ways: through addition or removal; or through exchange of the liquid fluids in these compartments.
The addition or removal method consist of the introduction or removal of a liquid fluid in the aforementioned compartments without evacuating the gas inside, for this reason the gas contained in the compartments must be susceptible to pressure.
The fluid exchange method consists of the evacuation all or part of the fluid occupying the mentioned compartments and to replace it by another of greater or lesser density depending on requirements.
Both methods are valid in order to achieve the objective. We will now analyze them:
1. Addition or removal method: The sealed compartments will be filled with a gas (preferably air), ideally at atmospheric pressure, and a suitable system located externally to the device for the attachment of turbines, through the installation of tubes could be the responsible to introduce the liquid fluid (preferably water) under pressure, the volume of which can be controlled using a series of valves. As this is done the air inside the compartments will increase in pressure. This effect could also be achieved through a series of valves arranged in the aforementioned sealed compartments and controlled by opening and closing the same. The supply of water can be achieved by using the current itself and in this way we could make use of the pressure that this would produce depending on the depth of the installation.

In either of the ways outlined, fluid can be extracted using a submersible electric pump installed in the lowest part of the aforementioned sealed compartments, in order to expel fluid directly into the current or via tubes which return the fluid to the external unit mentioned previously. If the liquid is expelled into the current, it is necessary to bear in mind that the force required depends on the depth at which the device is situated at the time of the realization.
It is advisable to use a tandem of submersible pumps located at various points on the lower surface of the sealed compartments, as well as some backup devices in case of a fault and in order to minimise maintenance frequency.
In this way of realization, it is likely that the initial volume of gas will reduce because of the continuous pressurizations and depressurizations so it is advisable to install a compressed air cylinder in a fixed part of the mentioned compartment in order to reintroduce the volume gas that has escaped. 2. Fluid exchange method: in this method the sealed compartments are filled with a gas, preferably air, at a pressure equals to that on the outside of the same compartment, caused by the depth of installation and consequent water pressure. This requires a cylinder to store the pressurized gas with equipment connecting it to the sealed compartments and a system of devices for the regulation and increase of pressure. The gaseous fluid can be evacuated by increasing the pressure and employing the aforementioned cylinder, following the substitution of a more dense liquid fluid is achieved by opening a series of valves arranged inside the sealed compartments which are in contact with the water current and consequently modify the supply automatically. The reverse process can be achieved using a system of devices to control and increase pressure, in this case leading from the cylinder to the sealed compartments which will expel the liquid fluid into the water current. This option might require more regular maintenance, depending on the capacity of the cylinder which contains the pressurized gas, because this gas cylinder will gradually depressurize through successive filling and emptying.
An alternative, to be recommended for ease of installation and maintenance of the device is to use the fluid exchange method in tandem with an external unit to store and supply pressurized gaseous fluid, including devices for the control and increase of pressure in order to interchange gaseous fluids in the sealed compartments. The supply of fluids to the sealed compartments can be controlled from this unit using its corresponding control and pressurization systems via a service tube. The compartments would include pipes in the lower part in touch with the current. In this case, it is unnecessary to install valves in these pipes. The evacuation of gaseous fluids is achieved through devices located in the unit mentioned above, using a service tube to return the fluids, and the substitution of more dense liquid fluids through ducts located in the lowermost part of the sealed compartments, as the water is drawn from the current automatically because there is no valve in the way. The evacuation process of the liquid fluid is achieved through the supply of pressurized air from the unit previously described, through the service tube to the sealed compartments at the pressure required to expel the water occupying the sealed compartments through the ducts which those compartments contain in their lowest section.

Several factors must be considered in the construction and choice of materials for the sealed compartments: depending on the depth of the installation of the device for the attachment of turbines. One factor to bear in mind is that the external water pressure must be compensated for by adjusting the overall density as previously described, in order that internal pressure that are going to withstand.

In constructing the sealed compartments as single units it is advisable to use an internal structure to reinforce the walls which form the compartments. The material for this reinforcement could be stainless steel, or another with sufficient resistance to the oxidisation and pressure to which it will be subjected. In order to create a large total volume of sealed compartments it is preferable to use a tandem of interconnected compartments. In this case, the units could have a cylindrical shape with semi-spherical locks at both sides, in order to better resistance of pressure. With regard to the use of these compartments when using the previously described addition and removal method, the material used to construct and seal the compartments is in direct contact with the water so any increase in interior pressure on the walls of the aforementioned compartments will be offset by the exterior water pressure due to the depth at which the device is located. It would be interesting if the entry valves for marine water contained a filter to prevent the entry into the compartments of marine species and inorganic material.

With regards to the devices for measuring the current flow strength, these can be placed at strategic points on the device for the attachment of turbines in order to measure the flow current strength at different heights in relation to the seabed, these devices could be barometers. The intention is then to use the resulting data and the appropriate devices to obtain the best position for the device with the previously outlined objective.

With regards to the conversion of energy obtained from the mechanical movement of a turbine rotor there are obviously various ways to accomplish this and any expert in this sector can suggest a suitable method. With regards to the generation of electric energy and specifically to the location of the electric generator, this can reside either on top of or inside the device structure, and in the particular case of transverse flow turbines it is recommended that the generator is located inside the turbine rotor itself. If it would be required a speed multiplier system, it will be made preferably double action or symmetrical to maintain the symmetry of the device and thereby its centre of gravity in respect to a hypothetical axis.

With regards to the installation of the device using a base employing ballast or excess weight which is recommended when installing at great depths, it is important that the base fulfils the following requirements to guarantee the stability of the attached device and to provide a solid support. In order to calculate the required weight it must de taken into account the vector force generated by its weight, the vector force resulting from the effect of the current flow on it and on the whole device, and the vector force generated by the action of the sealed compartments of the device to the attachment of turbines when they are completely or partially gas-filled, depending on their volume. The weight should be greater than the sum of the other parts.

With regards to support, in order for the device to function correctly it requires a support which guarantees that the pivot mechanism (25) remains horizontal with respect to the marine surface, and so it is prudent to select a suitable site on the seabed which fulfils this requirement. When circumstances dictate installation in a site where the seabed has an irregular topography, the aforementioned ballast or excess weight can be fitted with extendable legs (16) attached to the underneath with some type of controlled mechanism which accomplishes this function. In this way the aforementioned ballast could be installed in the ideal position.

In order to undertake maintenance when the installation of the device (24) for the attachment of turbines using the pivot (25) is secured directly to the (previously prepared) seabed or riverbed, the device could be removed by disconnecting it from the mechanism (25). This procedure should not present any technical problems up to a certain depth.

In contrast, when the device (24) is installed at great depths it is necessary to attach it firstly to a base and thereby to the seabed. In this case the device can be brought to the surface using a cable, chain or similar, connected to a point of the ballast which is located in such a way as not to impede the movement of the device for the attachment of turbines. This cable or similar could be attached to a surface buoy and by hauling the cable up, the whole device can be brought to the surface.

Apart from this and other possible methods, one sound technique would be to employ a series of inflatable and tensile buoys or a series of controllable sealed compartments filled with water. If this second method is employed, it is advisable that the required volume be obtained through the realization of a tandem of multiple connected units. These units could be cylindrical having semi-spherical locks at both sides in order to provide greater resistance to pressure. These units could be located in one or several positions in the ballast. The inflation of the tensile buoys could be achieved through the release of a gas housed in a pressurized container. In order to evacuate the water contained in the sealed compartments, pressurized air can be injected from the uppermost point of the compartments which will cause an evacuation of the water from a lower point. The release of the gas could be controlled by a system which receives its instruction via communication cable although it might be more appropriate to do this via radio control or a similar system. Another way of releasing the pressurized gas would be through the use of other dedicated equipment which could perform this function.

It is possible to install a device to assist or control the raising to the surface of the whole system: through which the expulsion of water and replacement with pressurized gas the sealed compartments in the base would raise the entire system to the surface. Because of the depth of installation and its location in a current it is advisable to install a device providing a spool (19) of cable, chain or similar attached to an inflatable balloon-like material (28) or similar. In this way as pressurized gas is injected into this balloon-like material, the cable, chain or similar is hauled to the surface. Once there from a boat, platform or similar the ascension of the main system can be controlled using an attachment or retrieval system of this.

### Description of drawings

To complete the description and in order to assist better comprehension of the inventions features, it is enclosed as integral part of the description a set of illustrative and non restrictive drawings in which the following has been shown:
Fig. 1 - Displays a frontal view according to the current flow of the device for the attachment of turbines, incorporating a transverse flow turbine.
Fig. 2 - Displays a profile view of the device for the attachment of turbines, incorporating a transverse flow turbine. In this view the similarity to the profile of a boomerang can be appreciated.
Fig. 3 - Displays a plan view of the device for the attachment of turbines, incorporating a transverse flow turbine. In this view the similarity to the plan view of an aeroplane can be appreciated.

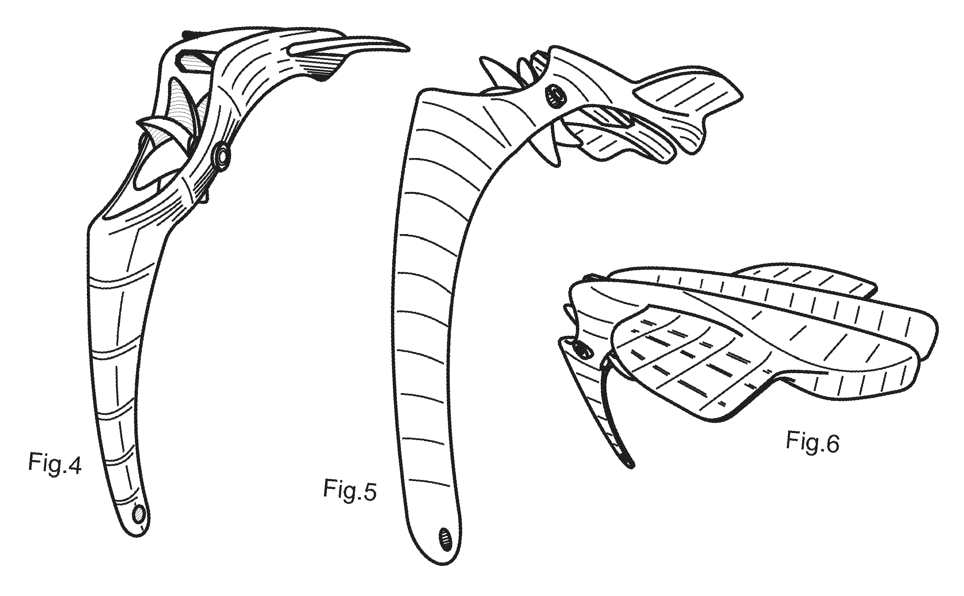

Fig. 4, Fig. 5, and Fig. 6 - Displays a series of views in perspective way of the device for the attachment of turbines, incorporating a transverse flow turbine.

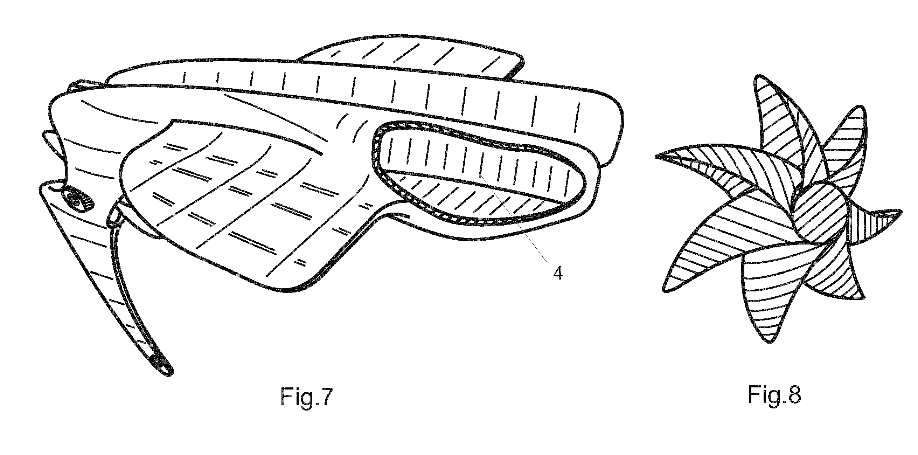

Fig. 7 - Displays a perspective view of the device for the attachment of turbines, in which a cut has been done in order to show the location and shape of one of the sealed compartments.
Fig. 8 - Displays a perspective view of a transverse flow turbine, with a rotor composed of two parallel discs to which the curved circular shaped blades are attached.
Fig. 9 and Fig. 10 - Display a profile view of the device for the attachment of turbines in two positions, one with an elevated position of the area where the sealed compartments are located, and the other one in a lower raising position, in which, by mean of indicative arrows, the current flow effect has been simulated.
Fig. 11 - Displays a partial cut done in the figure 10, in order to highlight the effect on the current flow of the shape of the parts (6), and also its influence on the turbine.
Fig. 12 - Displays a view of the uppermost section of the device for the attachment of turbines, taking the surface to the base as reference, which corresponds to the plan view of figure 2, without the turbine and the shape (7) of the device, in which a flow lines are shown over different parts and areas of the device.

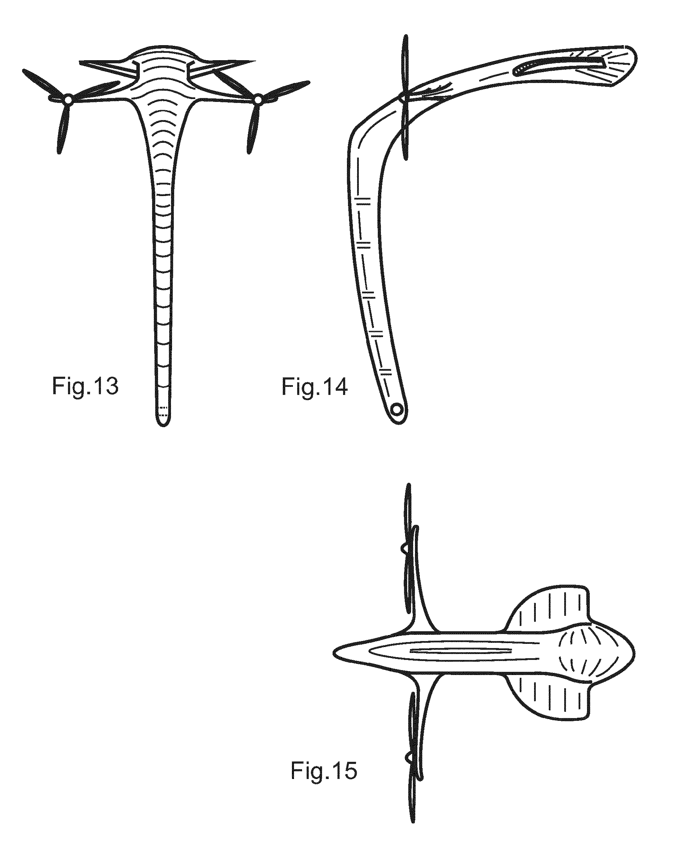

Fig. 13, Fig. 14 and Fig. 15 - Display the front, profile and plan views of another version of the device for the attachment of turbines, which demonstrate the installation of turbines in an alternative location of the device, as well as another kind of turbine.

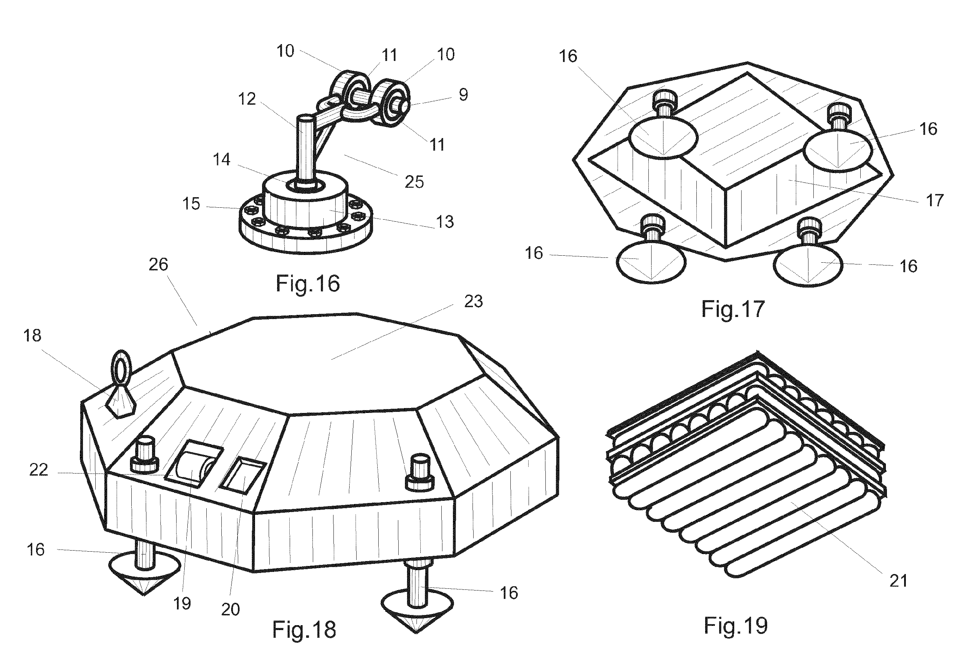

Fig. 16 - Displays a perspective view of a mechanism by which the device for the attachment of turbines can be connected, for its accommodation on a riverbed or seabed.
Fig. 17 - Displays a perspective view of the lower part of a kind of ballast, where the distribution of the supporting legs (16) and an interior area (17) for the accommodation of some sealed compartments can be seen.
Fig. 18 - Displays a perspective view of a kind of ballast or excess weight.
Fig. 19 - Displays a perspective view of a possible distribution and placement of a series of sealed compartments (21), for its installation in the ballast part (17).

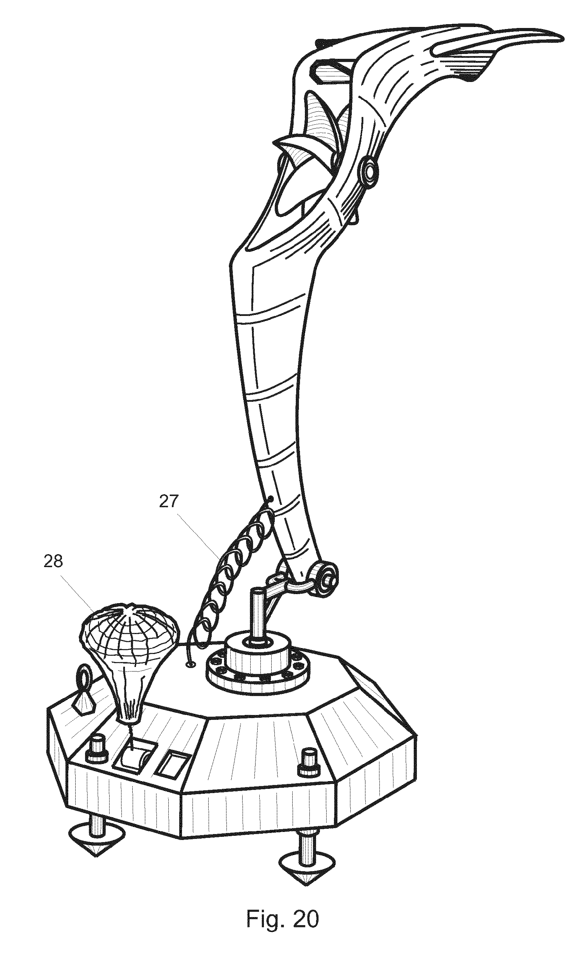

Fig. 20 - Displays a perspective view of a whole system formed by a device for the attachment of turbines in which a turbine has been installed, connected to a ballast by a mechanism (25), in which it can be seen the balloon (28) spread of the device intended to assist and control the raising of the device.

### Preferable implementation of the invention

Of the various possible alternatives, a preferable implementation of the device for the attachment of turbines consists of its installation on a regular and appropriate seabed in order to obtain electric energy from deep ocean currents with variable depth and flow direction, which flows at a considerable depth. The following elements are required to achieve this:
1. A ballast or excess weight (26), whose shape and weight are appropriate to guarantee its immobility on the seabed. The ballast includes an area (23) for the location of the pivot mechanism (25). It also includes a harnessing point (18) or similar, that will be used to anchor the entire system to the seabed. The ballast includes a set of legs (16) in order to optimize its fixing to the seabed. Located in a space (17) in the lower part of the ballast there are a set of sealed compartments (21), preferably water-filled, connected to one another and provided with a set of valves controlled remotely that allow the injection of pressurized air from the upper section in order to evacuate the water inside. The sealed compartments (21) have a cylindrical shape and the side locks have semi-spherical shape in order to offer a better resistance to the water pressure at depth. The sealed compartments (21) are connected by a set of pipes to a pressurized air supply system, and have enough volume to raise the installed entire system to the surface, having expelled the necessary quantity of water. The ballast (26) includes a device to help or control the raising for maintenance tasks, consisting of a spool (19) around which a strip of a high-resistance material to the traction is rolled and to the end of which is attached an inflatable balloon-type device (28) by which, when the pressurized air has been injected, the strip can be hauled to the water surface, where it can be collected and used to control the raising operation.
2. A pivot mechanism (25), provided with an horizontal shaft (9) appropriate to function as an axle, which is supported by a mechanism (10) that contains a set of bearings (11), where in the shaft can be fixed to the mechanism using screws. This entire system is joined to a new shaft (12) that functions as a vertical axis, and is supported by a similar mechanism (13) that contains a set of bearings (14) orientated 90 degrees in reference to those described previously. The fixing of this mechanism (25) to the ballast (26) will be carried out using screws (15). The mechanism (25) allows the device (24) 2 independent degrees of freedom in its movement.
3. A device (24) for the attachment of turbines with a particular hydrodynamic shape in its profile view similar to a boomerang (see Fig. 2) and in its plan view similar to an aeroplane (see Fig. 3). The device (24) includes a support or connection point (1) and devices for the measurement of flow intensity located at different points of the device (24) for housing turbines, connected to a system to analyze the data recorded. The device (24) has a series of openings and support points (2), depending on what is required for the attachment of a hydraulic turbine (8), preferably of transverse flow, with a rotor composed of two parallel discs to which the curved circular blades are joined, to improve its integration into the hydrodynamics of the entire system. The device (24) contains a set of sealed compartments (4) occupied by a gas, preferably pressurized air, a series of lift and cutting-off valves, provided with mechanisms for the remote control of this action and a set of tubes for the supply and return of the pressurized air, that originate from an upper part of the sealed compartments and run through the device (24) for the attachment of turbines reaching a position in the ballast, in order to be connected to an outside installation by means of the appropriate devices.
4. A transverse flow hydraulic turbine (8), with a rotor composed of two parallel discs to which the curved circular blades are joined, in order to achieve better integration into the hydrodynamics of the entire system, and the intended performance of the device (24) for the attachment of turbines in a water current, located at the point (2) and employing a system that allows rotation.
5. A submersible electric generator connected to the turbine, preferably of a kind that could be incorporated inside the rotor itself, to keep the system stabilizationd and to maintain the hydrodynamics of the device. It would be also considered a protected installation that connected to the generator, will run through the device for the attachment of turbines to the ballast with the purpose of being attached to a submarine electrical installation, by means of the appropriate devices.
6. An installation, outside the specified entire system, composed of a set of devices relating to the pressurized air supply and control system which forms a part of the entire system previously described.
7. A submarine power line, connected to the electric installation of the generator intended to transport the electricity supply from the generator.
The procedure for the installation of the device for the attachment of turbines is as follows.

### Preparation of the entire system for immersion

To anchor the entire system, the different devices must be connected; the pivot mechanism (25) described before must be installed in the ballast, in the section (23) specified for this purpose. The device (24) for the attachment of turbines must be connected to this mechanism by means of a shaft (9) that performs the function of an axis. In this device (24) the turbine is installed, which incorporates an internal electric generator, the pipes for the service, supply and return of the pressurized air and the power line for supplying power from the generator to the respective connection points arranged in the ballast. In order to make the anchoring process easier, these facilities could be joined using some kind of fixture or by some kind of canal systems.

### Immersion of the entire system

Once preparation for installation has been completed, we proceed to the immersion stage having secured a site on the specific seabed with regular and appropriate surface for the location of the entire system. To make immersion easier the filling of the sealed compartments with water can be controlled, in order to ensure a controlled immersion with less resistance due to the weight of the entire system.

Immersion will be accomplished from a boat, platform or similar, provided with a crane or another system to manoeuvre and support the entire system, by means of a strip, cable or chain with high-resistance to traction, attached at one end a mechanism which allows attachment and release by remote control, and connected to the ballast by means of the attachment mechanism (18).

Once that the device has been anchored and the cable, chain or similar has been unattached from the ballast, we will proceed to fill the sealed compartments (21) located in the lower part (17) of the ballast with water in order to guarantee its immobility.

Next, the entire system described and the aforementioned device for the attachment of turbines will operate according to the following conditions met at the moment of getting the seabed:
Firstly, we have ballast with a load, with the required form and support to guarantee its immobility.
Secondly, in the platform (23) of the ballast, which remains in horizontal position, a pivot mechanism (25) is installed appropriately.
Thirdly, the device (24) for the attachment of turbines is connected to this mechanism (25) by means of a shaft (9).
Fourthly, the device (24) containing the turbine and the generator are suspended in the water.

### Water current effect under these circumstances:

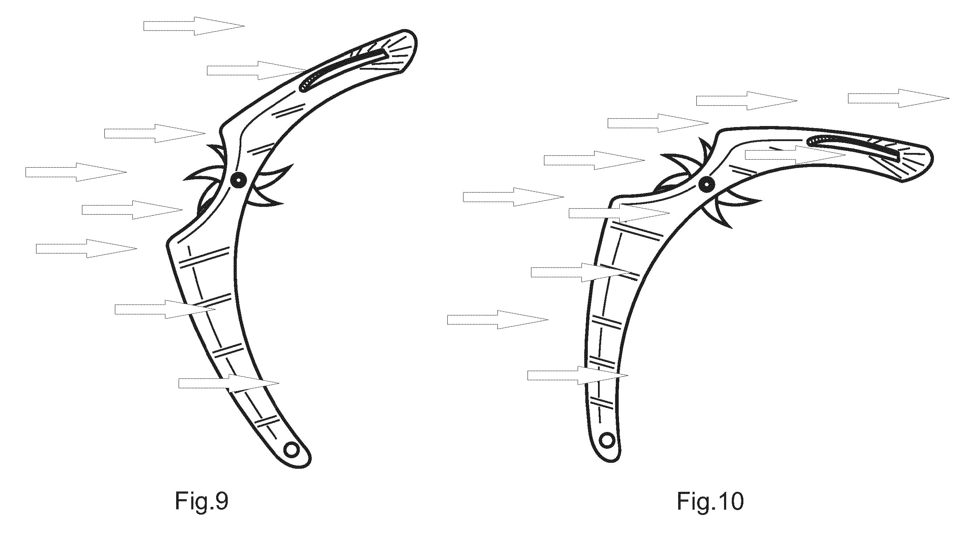

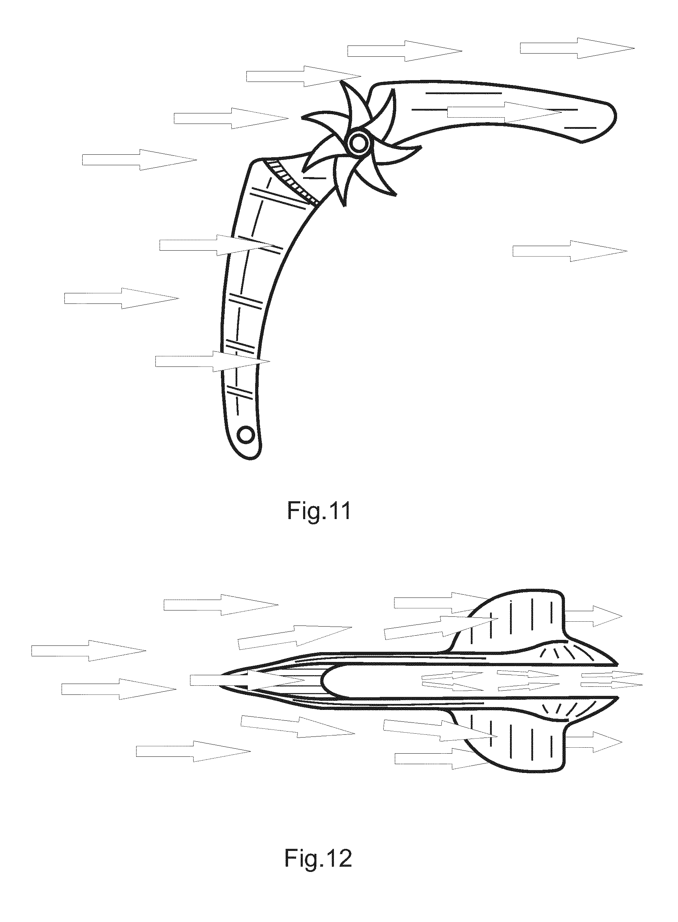

The profile (see Fig. 2) of the device (24) for the attachment of turbines has a bigger surface than the front (see Fig. 1); consequently it will be subject to greater force from the current flow, and will therefore adopt a position directly with its leading edge into the current flow (see Fig. 1).
Once that the device has been orientated in this position (see Fig. 9), the shape (3) similar to an aeroplane wings, of the rearmost section of the body in relation to the current flow direction, will offer the biggest opposition to the current flow, which will provoke the inclination of the same device for the attachment of turbines towards the seabed (see Fig. 10).
At this point, the turbine is orientated and fixed in the current flow. Then, the force transmitted by the current flow over the rotor, composed of two parallel discs to which the curved circular-shaped blades are joined, will provoke a rotational movement in the turbine.
As a result of this action and due to its connection to an electricity generator, the supply of this will take place, which through its correspondent installation to the earth could be used conveniently.
The rotational movement of the turbine will provoke an oscillating force that will be transmitted through the whole device body (24). To minimize this action, the device in question benefits from the aforementioned shape (3) in its rearmost section, similar to aeroplane wings, contributes to balancing the forces (see Fig. 12) in a water current flow.

Next, we will take readings from the devices for measuring flow intensity located in different points of the surface of the device (24) for the attachment of turbines, which will be connected to a system to analyse the data recorded. From there, analysis and observation of this data will allow the determination of the best angle of inclination of the device for the attachment of turbines with regard to the current flow intensity in the direction of the turbine.

Then if it would be necessary, the angle of inclination could be regulated in relation to the seabed by the device for the attachment of turbines using a fluid exchange method exchange in the sealed compartments (4), as previously described.
In order to achieve this and depending on the type of operation desired then the following procedures will be followed:
In order to reduce the angle of inclination between the device (24) for the attachment of turbines and the seabed, we will substitute the precise required amount of pressurized air contained in the sealed compartments (4) of the device. This action would be achieved using the service tube for pressurized air connecting between the upper part of the sealed compartments to the external unit described previously, by means of the appropriate and stipulated devices. The substitution of liquid fluid with a higher density, than marine water, would take place simultaneously by mean of the pipes located in the lower part of the sealed compartments, without any kind of valve.

In order to increase the angle of inclination between the device for the attachment of turbines and the seabed, the precise required amount of liquid fluid will be expelled from the sealed compartments (4) of the device. This will be achieved through the introduction of pressurized air at the required pressure, using the service tube for pressurized air which connects the upper part of the sealed compartments and the external unit mentioned previously, by mean of the appropriate devices. Simultaneously the higher density fluid would expel into the sea by means of the pipes located in the lower part of the sealed compartments, without using any kind of valve.

### Raising of the entire system for carrying out maintenance

In order to achieve the controlled raising of the entire system, the assistance and control device will be activated. In order to do this sufficient pressurized air will be supplied to the inflatable device (28) similar to a balloon that is folded in a compartment (20) of the ballast (26), from the external unit where the required devices are located, for the purpose of raising the device to the water surface, hauling a cable with a high-resistance to traction, that is rolled in a spool (19) located in a compartment (22) of the ballast. Once on the surface the cable will be collected and used to control the raising.

Thereafter, from the external unit where the necessary devices for the supply and control of pressurized air are located in the ballast, we will proceed to supply pressurized air at enough pressure in the sealed compartments (21), with the purpose of expelling the water contained in them using a series of pipes. When the entire system volume becomes less dense than marine water, it will begin to rise to surface. The speed of this raising can be controlled by regulating the supply and availability of pressurized air in the sealed compartments (21), from the external unit mentioned previously.

## Claims

1. Submersible device (24) for the attachment of water wheels or turbines in order to obtain energy from flowing water having a variable depth and flow direction. The device is intended to be installed on a seabed or riverbed using a pivoting mechanism (25) and provided with a series of devices for controlling the inclination of the device (24) for the attachment of turbines and positioning it at the optimum angle of incidence between the water flow and the turbine which consists of:
- a support or connection point (1) to a mechanism (25),
- a series of points (2) for the accommodation of a hydraulic turbine at a sufficient distance from the connection area (1) to allow certain mobility in order to reach the current flow,
- a series of devices for the measurement of the flow intensity, connected to a system for analysing the data recorded,
- a series of sealed compartments (4) occupied by a gas.
- a series of devices capable of provoking a change of density in the sealed compartments, defined by:
- having a particular hydrodynamic shape that contributes to its position and stabilization in the direction and centre of the current, said shape is similar to that of a boomerang in profile view and that of an aeroplane in plan view,
- having a body of structure and multifunctional symmetrical shape in relation to a hypothetical central plan, in which every different part and shape contribute to different objectives and performs different actions.

2. Device in accordance with claim 1 **characterized** because the different areas contribute to the following actions:
- the shape of the area (6) previous to the area where the turbine is located contributes to optimize its performance, acting as an injector by directing the water towards the rotor.
- the shape of the area (5) to the rear of the turbine (8) in the direction of current flow contributes to minimize the effects of the turbulences that will provoke the movement of the turbine,
- the shape of the rearmost part (3) in relation to the current flow direction, which is similar in appearance to the wings of an aeroplane, makes a particular contribution to the stabilization of the device,
- the shape of the area (7) above that where the turbine is located contributes to the reinforcement of the area (5) and, at the same time, acts like a nozzle for the turbine.

3. Device in accordance with claim 1 **characterized** because the pivot mechanism (25) includes two perpendicular rods (9 and 12) between them that allow the device (24) to have 2 independent degrees of freedom of movement.

4. Device in accordance with claim 1 **characterized** because the gas that occupies the sealed compartments is air.

5. Device in accordance with claim 1 **characterized** because the sealed compartments are composed of a single cavity, having an internal structural reinforcement.

6. Device in accordance with claim 1 **characterized** because the sealed compartments are composed of a series of interconnected units.

7. Device in accordance with claim 6 **characterized** because the units have a cylindrical shape and the locking sides have a semi-spherical shape.

8. Device in accordance with claim 6 **characterized** because the load and unloading of water into the sealed compartments does not require valves.

9. Device in accordance with claim 8 **characterized** because the intake pipe marine water includes a filter to prevent the entrance of marine species and organic material into the sealed compartments.

10. Device in accordance with previous claims **characterized** because the presence of another sealed compartments located in another part of the structure serve the purpose of lightening the load or contributing to the stabilization of the device.

11. Device in accordance with claim 1 **characterized** because the devices that will provoke a change of density in the sealed compartments will use a fluid exchange method.

12. Device in accordance with claim 1 **characterized** because the devices that will provoke a change of density in the sealed compartments will use a method for the addition and subtraction of fluids.

13. Device in accordance with claim 12 **characterized** because the storage and pressurisation unit, provided with devices for the control and increase of pressure is located in an area outside of the installation.

14. Device in accordance with claim 1 **characterized** because the devices for measurement of the flow intensity are barometers.

15. Device in accordance with claim 1 and 2 **characterized** because the turbine is a transverse flow turbine.

16. Device in accordance with claim 1 and 2 **characterized** because the turbine is an axial flow turbine.

17. Device in accordance with claim 15 and 16 **characterized** because there are two or more turbines located in series in the area (2).

18. Device in accordance with claim 15 and 16 **characterized** because there are two or more turbines located in parallel in the area (2).

19. Device in accordance with claim 15 and 16 **characterized** because there are two or more turbines located in parallel in the area (3).

20. Device in accordance with claim 1 defined by being suitable for installation at a great depth.

21. Device in accordance with claim 1 **characterized** because it is realized using a metallic material structure that could be covered with an appropriate plastic material to protect against corrosive elements in the environment.

22. Device in accordance with claim 1 **characterized** because the installation is carried out directly on a seabed or riverbed.

23. Device in accordance with claim 1 **characterized** because its installation in a seabed or riverbed is carried out by means of ballast.

24. Device in accordance with claim 23 **characterized** because the ballast (26) is provided with:
- an area for the location of the pivot mechanism (25)
- a series of legs(16)
- an attachment point (18) for the anchoring of the entire system
- some sealed compartments
- a device to assist and control of the raising.

25. Device in accordance with claim 24 **characterized** because the legs (16) are extendable in order to fix the ballast in the appropriate position.

26. Device in accordance with claim 24 **characterized** because the sealed compartments are occupied by water and in their upper part are connected to a pressurized air supply system in order to be able to evacuate this water and to raise the entire system to the surface.

27. Device in accordance with claim 24 **characterized** because the device for assistance and control of the raising consists of a spool (19) where a strip, cable or chain with high-resistance to traction is coiled and in which end has an inflatable device (28).

28. Method for electric energy generation that uses the device (24) for the attachment of turbines in accordance with the previous claims, consisting of moving an electric generator using the work developed by the turbine through a series of transmission mechanisms.

29. Procedure of the device anchorage (24) for the attachment of turbines in accordance with the previous claims **characterized** because the action is carried out from a boat, platform or similar, provided with a crane or system to manoeuvre and support the entire system, with the help of a strip, cable or chain with a high-resistance to traction, and through the controlled filling of the sealed compartments with water the immersion is realized.

30. Procedure of raising the device to the surface (24) for the attachment of turbines in accordance with the previous claims **characterized** because a system for assistance and control of the raising is used. Once this system reaches the surface it could be picked up and used to control the raising; and because through the supply of pressurized air to the different sealed compartments, the evacuation of water contained in them and the raising of the entire system to the surface are achieved.

## Amended claims

### Amended claims under Art. 19.1 PCT

**1.** Submersible device (24) for the attachment of water wheels or turbines in order to obtain energy from a fluid current, preferable installed on a seabed or riverbed using a pivoting mechanism (25) and provided with a series of devices for controlling the inclination of the device (24) for the attachment of turbines and positioning it at the optimum angle of incidence between the water flow and the turbine which consists of:
- a support or connection point (1) to a mechanism (25),
- a series of support points (2) for the accommodation of a hydraulic turbine at a sufficient distance from the connection area (1) to allow certain mobility in order to reach the current flow,
- a series of devices for the measurement of the flow intensity, connected to a system for analysing the data recorded,
- a series of sealed compartments (4) occupied by a gas.
- a series of devices capable of provoking a change of density in the sealed compartments, defined by:
- having a particular hydrodynamic shape that contributes to its position and stabilization in the direction and centre of the current, said shape is similar to that of a boomerang in profile view and that of an aeroplane in plan view,
- having a body of structure and multifunctional symmetrical shape in relation to a hypothetical central plan, in which every different part and shape contribute to different objectives and performs different actions.

**2.** Device in accordance with claim 1 **characterized by** the following elements setting and by the layout regarding the whole system:
- a deflector area (6) previous in the water flow direction where the turbine (8) is located acting as an injector by directing the water towards the rotor appropriately.
- a grooved area (5) rear in the water flow direction where the turbine (8) is located in order to minimize the effects of the originated turbulences;
- a flat area (3) similar to the wings of an aeroplane, rear in the water flow direction where the turbine (8) is located in order to make a particular contribution to the stabilization,
- a bonding surface (7) above that where the turbine (8) is located contributes to the reinforcement of the grooved area (5) and, at the same time, acts like a nozzle for the turbine (8).

**3.** Device in accordance with claim 1 **characterized** because the pivot mechanism (25) includes two rods (9 and 12) perpendicular between them that allow the device (24) to have 2 independent degrees of freedom of movement.

**4.** Device in accordance with claim 1 **characterized** because the gas that occupies the sealed compartments is air.

**5.** Device in accordance with claim 1 **characterized** because the sealed compartments are composed of a single cavity, having their walls an internal structural reinforcement.

**6.** Device in accordance with claim 1 **characterized** because the sealed compartments are composed of a series of interconnected units.

**7.** Device in accordance with claim 6 **characterized** because the units have a cylindrical shape and the locking sides have a semi-spherical shape.

**8.** Device in accordance with claim 6 **characterized** because the load and unloading of water into the sealed compartments does not require valves.

**9.** Device in accordance with claim 8 **characterized** because the intake pipe marine water includes a filter to prevent the entrance of marine species and organic material into the sealed compartments.

**10.** Device in accordance with previous claims **characterized** because the presence of another sealed compartments located in another part of the structure serve the purpose of lightening the load or contributing to the stabilization of the device.

**11.** Device in accordance with claim 1 **characterized** because the devices that will provoke a change of density in the sealed compartments will use a fluid exchange method.

**12.** Device in accordance with claim 1 **characterized** because the devices that will provoke a change of density in the sealed compartments will use a method for the addition and subtraction of fluids.

**13.** Device in accordance with claim 12 **characterized** because the storage and pressurisation unit, provided with devices for the control and increase of pressure is located in an area outside of the installation.

**14.** Device in accordance with claim 1 **characterized** because the devices for measurement of the flow intensity are barometers.

**15.** Device in accordance with claim 1 and 2 **characterized** because the turbine is a transverse flow turbine.

**16.** Device in accordance with claim 1 and 2 **characterized** because the turbine is an axial flow turbine.

**17.** Device in accordance with claim 15 and 16 **characterized** because there are two or more turbines located in series in the support area (2).

**18.** Device in accordance with claim 15 and 16 **characterized** because there are two or more turbines located in parallel in the support area (2).

**19.** Device in accordance with claim 15 and 16 **characterized** because there are two or more turbines located in parallel in the area located most rearwards with respect to the current flow, which is similar to aircraft wings.

**20.** Device in accordance with claim 1 **characterized** because it has a series of measuring devices of flow intensity connected to a system in order to analyze the data obtained.

**21.** Device in accordance with claim 1 **characterized** because it is realized using a metallic material structure that could be covered with an appropriate plastic material to protect against corrosive elements in the environment.

**22.** Device in accordance with claim 1 **characterized** because the installation is carried out directly on a seabed or riverbed.

**23.** Device in accordance with claim 1 **characterized** because its installation in a seabed or riverbed is carried out by means of ballast.

**24.** Device in accordance with claim 23 **characterized** because the ballast (26) is provided with:
- an area for the location of the pivot mechanism (25)
- a series of legs(16)
- an attachment point (18) for the anchoring of the entire system
- some sealed compartments
- a device to assist and control of the raising.

**25.** Device in accordance with claim 24 **characterized** because the legs (16) are extendable in order to fix the ballast in the appropriate position.

**26.** Device in accordance with claim 24 **characterized** because the sealed compartments are occupied by water and in their upper part are connected to a pressurized air supply system in order to be able to evacuate this water and to raise the entire system to the surface.

**27.** Device in accordance with claim 24 **characterized** because the device for assistance and control of the raising consists of a spool (19) where a strip, cable or chain with high-resistance to traction is coiled and in which end has an inflatable device (28).

**28.** Device for the attachment of turbines in accordance with claim 1 **characterized** because of showing in its profile view a surface area which is greater than the frontal view, so as to be subject of a greater thrust by the current flow and of consequent positioning opposite the current flow in its frontal view.

**29.** Method for electric energy generation that uses the device (24) for the attachment of turbines in accordance with the previous claims, consisting of moving an electric generator using the work developed by the turbine through a series of transmission mechanisms.

**30.** Procedure of the device anchorage (24) for the attachment of turbines in accordance with the previous claims **characterized** because the action is carried out from a boat, platform or similar, provided with a crane or system to manoeuvre and support the entire system, with the help of a strip, cable or chain with a high-resistance to traction, and through the controlled filling of the sealed compartments with water the immersion is realized.

**31.** Procedure of raising the device to the surface (24) for the attachment of turbines in accordance with the previous claims **characterized** because a system for assistance and control of the raising is used. Once this system reaches the surface it could be picked up and used to control the raising; and because through the supply of pressurized air to the different sealed compartments, the evacuation of water contained in them and the raising of the entire system to the surface are achieved.
